(19) Europäisches Patentamt
European Patent Office
Office européen des brevets

(11) Veröffentlichungsnummer : **0 462 424 B1**

(12)

# EUROPÄISCHE PATENTSCHRIFT

(45) Veröffentlichungstag der Patentschrift :
**23.12.92 Patentblatt 92/52**

(51) Int. Cl.⁵ : **F02B 23/04, F02B 19/08, F02B 23/06**

(21) Anmeldenummer : **91108588.4**

(22) Anmeldetag : **27.05.91**

(54) **Brennraum mit einer Kolbenmulde.**

(30) Priorität : **19.06.90 DE 4019448**

(43) Veröffentlichungstag der Anmeldung :
**27.12.91 Patentblatt 91/52**

(45) Bekanntmachung des Hinweises auf die
Patenterteilung :
**23.12.92 Patentblatt 92/52**

(84) Benannte Vertragsstaaten :
**DE ES FR GB IT**

(56) Entgegenhaltungen :
**GB-A- 930 498**
**GB-A- 2 160 262**
**GB-A- 2 215 400**

(73) Patentinhaber : **Bayerische Motoren Werke
Aktiengesellschaft
Patentabteilung AJ-3 Postfach 40 02 40
Petuelring 130
W-8000 München 40 (DE)**

(72) Erfinder : **Berger, Herbert
Hartl 36
A-4311 Schwertberg (AT)**

## Beschreibung

Die Erfindung betrifft einen Brennraum für eine mit einer Vor- oder Wirbelkammer versehene Brennkraftmaschine mit Gaswechselventilen, mit einem von der Kammer auf einen Kolben gerichteten Übertrittskanal, sowie mit einer Kolbenmulde, welche im Auftreffbereich des Übertrittskanales eine Schneide aufweist, seitlich derer sich zwei in Volumina auslaufende, Brenngase führende Arme verzweigen. Ein derartiger Brennraum ist in der gattungsbildenden DE-PS 27 05 271 beschrieben und kann insbesondere an selbstzündenden Einspritz-Brennkraftmaschinen zum Einsatz kommen.

Gewählt wird eine derartige bekannte Brennraumform, um den von der Vor- bzw. Wirbelkammer über den Übertrittskanal in den Hauptbrennraum gelangenden Brenngasstrom unter allen Einsatzbedingungen stets in konstanter Weise aufzuteilen, so daß unter konstanten Randbedingungen stets eine vergleichbare Verbrennung erfolgt. Vorteilhafterweise verursacht diese Schneide zusätzliche gewünschte Turbulenzen im Hauptbrennraum.
In Versuchen hat sich dabei jedoch herausgestellt, daß aufgrund der schmalbandigen, über die Kolbenbodenmitte verlaufenden Flammenfront die Anforderungen hinsichtlich einer optimalen Sauerstoffausnutzung nicht erfüllt werden. Hier Abhilfe zu schaffen, hat sich die vorliegende Erfindung zur Aufgabe gestellt.

Zur Lösung dieser Aufgabe ist vorgesehen, daß die bogenförmigen Arme derart ausgerichtet sind, daß sie den in die im wesentlichen unterhalb der Gaswechselventile liegenden Volumina austretenden Brenngasen eine gleichgerichtete Drallbewegung aufprägen. Hierdurch werden die aus der Vor- bzw. Wirbelkammer überströmenden Brenngase derartig verwirbelt, daß der Hauptbrennraum vollständig von Wirbelströmungen durchzogen wird. Hiermit wird der vor der Verbrennung im Hauptbrennraum enthaltene Sauerstoff optimal ausgenutzt. Hierdurch ist eine Verbesserung der Verbrennung in ihrer Gesamtheit, insbesondere jedoch hinsichtlich der Kohlenmonoxyd- und Rußemission feststellbar. Die Volumina können sich hierbei direkt unterhalb der Gaswechselventile befinden, sie können aber auch aus dem Kolbenboden herausgearbeitet sein.

Zwar ist aus der DE-OS 33 14 662 ebenfalls ein Brennraum mit sich in ähnlicher Weise verzweigenden Armen bekannt geworden, hierbei jedoch werden die Brenngase in entgegengerichtete Drallbewegungen versetzt. Diese gegenläufigen Wirbel, welche lediglich nahe dem Übertrittskanal entstehen können, können jedoch ein Strömungshindernis für die aus der Vor- bzw. Wirbelkammer überströmenden Brenngase bilden. Desweiteren zeigt diese Schrift keine Schneide.

Ist gemäß Anspruch 2 die Drallbewegung der Brenngase einem sog. Einlaßdrall gleichgerichtet, so unterstützt letzterer die erwünschte Verwirbelung.

Mit den Merkmalen des Anspruchs 3 wird durch Reflexion der Brenngase an der Brennraum-Seitenwand die Verteilung der Brenngase zusätzlich gefördert. Zugleich wird die Drallbewegung der Brenngase verstärkt. Vorteilhafterweise ergibt sich mit dieser Ausbildung auch eine breitgefächerte Flammenfront, wodurch die örtliche Temperaturbelastung der den Brennraum begrenzenden Bauteile herabgesetzt wird.

Schließlich verbessern die Merkmale des Anspruchs 4 ebenfalls die Strömungsverhältnisse und verbessern darüber hinaus die mechanische Standfestigkeit des Kolbens, welche u. a. durch die auftretenden Wärmespannungen beeinflußt wird.

Im folgenden wird die Erfindung anhand eines bevorzugten Ausführungsbeispiels näher beschrieben. Es zeigt:

Fig. 1 einen Schnitt durch einen erfindungsgemäßen Brennraum,
Fig. 2 eine Aufsicht auf den Kolben,
Fig. 3 den Schnitt A-A aus Fig. 2, sowie
Fig. 4 den Schnitt B-B aus Fig. 2.

Innerhalb eines Zylinders 1 einer Brennkraftmaschine ist ein Kolben 2 geführt. Dieser begrenzt zusammen mit einem Zylinderkopf 3 einen Hauptbrennraum 4, welcher über einen Übertrittskanal 5 mit einer im Zylinderkopf 3 angeordneten Wirbelkammer 6 verbunden ist. Ferner sind im Zylinderkopf zwei Gaswechselventile 17, 18 geführt, unterhalb derer Volumina 7, 8 gebildet sind.

Im Boden des Kolbens 3 ist eine in ihrer Gesamtheit mit 9 bezeichnete Kolbenmulde vorgesehen, welche im wesentlichen aus zwei sich verzweigenden, zu den Volumina 7 bzw. 8 ausgerichteten Armen 10, 11 besteht. Im Auftreffbereich 15 des Übertrittskanales 5 liegen diese beiden Arme (10, 11) nebeneinander und sind durch eine aus der Kolbenmulde 9 herausgearbeitete Schneide 12 voneinander getrennt (vgl. insbesondere Fig. 4). Aufgrund dieser Schneide 12 stellt sich stets die gewünschte Aufteilung des über den Übertrittskanal 5 aus der Wirbelkammer 6 austretenden Brenngasstromes im Hauptbrennraum 4 ein.

Die Arme 10, 11 der Kolbenmulde 9 sind auf nahe den Volumina 7, 8 liegende Brennraum-Seitenbereiche 13, 14 ausgerichtet. Durch Reflexion an diesen Brennraum-Seitenbereichen 13, 14 wird die Verteilung der Brenngase weiter gefördert. Insbesondere sind die bogenförmigen Arme 10, 11 jedoch derart angeordnet, daß den darin geführten Brenngasen die durch Pfeile 16 dargestellte Drallbewegung aufgeprägt wird. Dazu liegt der Auslaufbereich 10' des ersten Armes 10 auf der dem Auftreffbereich 15 zugewandten Seite des ersten Volumens 7 und der Auslaufbereich 11' des zweiten Armes 11 auf der dem Auftreffbereich 15 abgewandten Seite des zweiten Volumens 8. Ferner ist zur Unterstützung dieser Drallbewegung 16 der Abstand des ersten Auslaufbereiches 10' vom zugewandten Brennraum-Seitenbereich 13 geringer als der Abstand des zweiten Auslaufbereiches 11' vom zugewandten Brennraum-Seitenbereich 14.

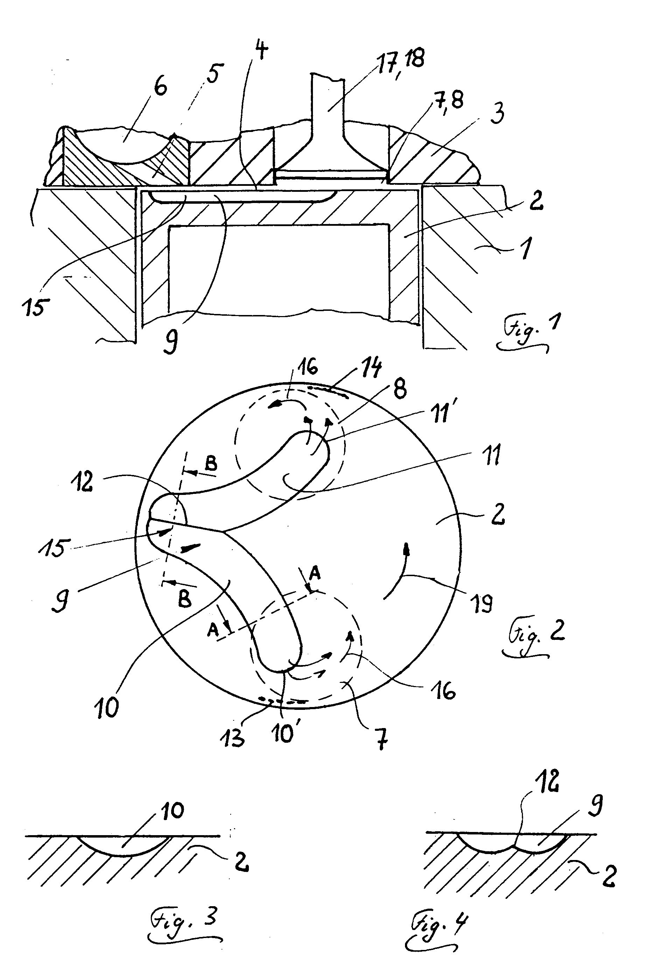

Vorteilhafterweise ist die Drallbewegung 16 einem sog. Einlaßdrall 19, der sich im Ansaugtrakt bei geöffnetem Einlaßventil einstellt, gleichgerichtet. Durch diese Wirbelbildung ergibt sich eine optimale Ausnutzung des im Hauptbrennraum vorhandenen Sauerstoffs. Zur Verbesserung der Strömungsverhältnisse sowie zur Reduzierung der schädlichen Auswirkungen der auftretenden Wärmespannungen sind dabei nicht nur die Auslaufbereiche 10', 11' der Arme 10, 11 abgerundet ausgebildet, sondern wie Fig. 3 zeigt, auch der Querschnitt der Arme 10, 11 halbkreisförmig ausgebildet.

All diese Maßnahmen ergeben bei stetiger Reproduzierbarkeit eine erhöhte Ausnutzung des Sauerstoffs während des Verbrennungsablaufes im Hauptbrennraum 4, so daß insbesondere eine Reduktion des Kohlenmonoxyd- und Rußausstoßes festgestellt werden kann. Vorteilhafterweise reduziert die breitgefächerte Flammenfront darüber hinaus die örtliche Temperaturbelastung der den Hauptbrennraum 4 begrenzenden Bauteile.

## Patentansprüche

1. Brennraum für eine mit einer Vor- oder Wirbelkammer (6) versehene Brennkraftmaschine mit Gaswechselventilen (17, 18) mit einem von der Kammer (6) auf einen Kolben (2) gerichteten Übertrittskanal (5), sowie mit einer Kolbenmulde (9), welche im Auftreffbereich (15) des Übertrittskanales (5) eine Schneide (12) aufweist, seitlich derer sich zwei in Volumina (7, 8) auslaufende, Brenngase führende Arme (10, 11) verzweigen, dadurch gekennzeichnet, daß die bogenförmigen Arme (10, 11) derart ausgerichtet sind, daß sie den in die im wesentlichen unterhalb der Gaswechselventile (17, 18) liegenden Volumina (7, 8) austretenden Brenngasen eine gleichgerichtete Drallbewegung (16) aufprägen.

2. Brennraum nach Anspruch 1,
dadurch gekennzeichnet, daß die Drallbewegung (16) der Brenngase einem während des Ansaugtaktes durch das geöffnete Einlaßventil im Brennraum hervorgerufenem Einlaßdrall (19) gleichgerichtet ist.

3. Brennraum nach Anspruch 1 oder 2,
dadurch gekennzeichnet, daß die Arme (10, 11) auf nahe den Volumina (7, 8) liegende Brennraum-Seitenbereiche (13, 14) ausgerichtet sind, wobei der Auslaufbereich (10') des ersten Armes (10) auf der dem Auftreffbereich (15) zugewandten Seite des ersten Volumens (7) und der Auslaufbereich (11') des zweiten Armes (11) auf der dem Auftreffbereich (15) abgewandten Seite des zweiten Volumens (8) liegt, und wobei der Abstand des ersten Auslaufbereiches (10') vom zugewandten Brennraum-Seitenbereich (13) geringer ist als der Abstand des zweiten Auslaufbereiches (11') vom zugewandten Brennraum-Seitenbereich (14).

4. Brennraum nach einem der Ansprüche 1 bis 3, dadurch gekennzeichnet, daß der Auslaufbereich (10', 11') der Arme (10, 11) abgerundet ausgebildet ist.

## Claims

1. A combustion chamber for an internal combustion engine having a pre-chamber or turbulent chamber (6) and gas change valves (17, 18), an overflow duct (5) extending from the chamber (6) to a piston (2), and a piston cavity (9) which, in the exit region (15) of the overflow duct (5), has an edge (12) at the side of which two arms (10, 11) branch and extend into chambers (7, 8), characterised in that the arcuate arms (10,11) are directed so that they impart a spinning motion (16) in a constant direction to the combustion gases flowing into the chambers (7, 8) which are disposed substantially below the gas change valves (17, 18).

2. A combustion chamber according to claim 1, characterised in that the spin (16) of the combustion gases is in the same direction as an intake spin (19) caused in the combustion chamber by the intake valve, which is opened during the suction stroke.

3. A combustion chamber according to claim 1 or 2,characterised in that the arms (10, 11) are directed towards side regions (13, 14) of the combustion chamber near the chambers (7, 8), the outlet region (10') of the first arm (10) being disposed on the side of the first chamber (7) facing the exit region (15) and the outlet region (11') of the second arm (11) being disposed on the side of the second chamber (8) remote from the exit region (15), and the distance of the first outlet region (10') from the facing side region (13) of the combustion chamber being less than the distance of the second outlet region (11') from the facing side region (14) of the combustion chamber.

4. A combustion chamber according to any of claims 1 to 3, characterised in that the outlet regions (10', 11') of the arms (10, 11) are rounded.

**Revendications**

1. Chambre de combustion pour un moteur à combustion interne équipé d'une chambre de tourbillonnement ou d'une anti-chambre (6), avec des soupapes de changement de gaz (17, 18), avec un canal de passage (5) dirigé de la chambre (6) vers un piston (2) et une goulotte de piston (9) qui présente une arête (12) dans la zone d'impact (15) du canal de passage (5), arête dont dérivent deux bras (10, 11) conducteurs de gaz de combustion et qui partent latéralement de l'arête pour aboutir dans deux volumes (7, 8), chambre de combustion caractérisée en ce que les bras courbes (10, 11) sont alignés pour induire dans les gaz de combustion sortant des volumes (7, 8) situés principalement en-dessous des soupapes de changement de gaz (17, 18) un mouvement de tourbillonnement dirigé dans le même sens (16).

2. Chambre de combustion selon la revendication 1, caractérisée en ce que le mouvement de tourbillonnement (16) des gaz de combustion est redressé pendant-la phase d'aspiration par le tourbillonnement à l'admission (19) provoqué dans la chambre de combustion par la soupape d'admission ouverte.

3. Chambre de combustion selon la revendication 1 ou 2, caractérisée en ce que les bras (10, 11) sont alignés sur des zones latérales de la chambre de combustion (13, 14) alignées à proximité des volumes (7, 8), la zone de sortie (10') du premier bras (10) étant située du côté du premier volume (7) tourné vers la zone d'impact (15) et la zone de sortie (11') du second bras (11) se trouve du côté du second volume (8) opposé à la zone d'impact (15), et la distance entre la première zone de sortie (10') et la zone latérale correspondante de la chambre de combustion (13) est inférieure à la distance entre la seconde zone de sortie (11') et la zone latérale (14) de la chambre de combustion, tournée de ce côté.

4. Chambre de combustion selon l'une des revendications 1 à 3, caractérisée en ce que la zone de sortie (10', 11') des bras (10, 11) est de forme arrondie.

Fig. 1

Fig. 2

Fig. 3

Fig. 4